# EUROPEAN PATENT APPLICATION

(11) **EP 0 696 837 A1**
(43) Date of publication of application: **14.02.1996**
(21) Application number: 95305663.7
(22) Date of filing: 14.08.1995
(51) Int. Cl.: H02M 1/00

(54) **A.C. to D.C. Voltage Converter**

(30) Priority: 12.08.1994 GB 9416371
(71) Applicant: HITACHI CONSUMER PRODUCTS (UK) LIMITED, Aberdare, Mid Glamorgan CF44 9UY (GB)
(72) Inventor: Townsend, Richard Samuel, Aberdare, Mid Glamorgan, CF44 7PB (GB)
(74) Representative: Evans, Huw David Duncan

(57) **Abstract**

An a.c. to d.c. voltage converter comprises a smoothing circuit connected to the output of a full-wave rectifier. The smoothing circuit comprises two capacitors C1, C2, a resistor R1 and a plurality of switching diodes D5-D8. The diodes are arranged such that when the output voltage from the rectifier rises, the capacitors C1,C2 charge in series through resistor R1. The power factor of the converter is low because the capacitance across the supply during charging is less than the individual capacitance of either of the capacitors C1,C2. The diodes are further arranged such that when the output voltage from the rectifier falls, the capacitors C1,C2 discharge in parallel through the d.c. load with the resistor connected out-of-circuit. The charge available during discharge is thus the sum of the charge stored by the individual capacitors C1,C2.

## Description

This invention relates to an a.c. to d.c. voltage converter, particularly a converter having an improved power factor.

It is desirable in a.c. mains powered circuits to maintain the power factor as close to unity as possible, and to reduce current harmonics to a minimum.

Generally most low-voltage mains powered appliances, such as televisions, comprise a rectifier which converts the sinusoidal a.c. supply into a full-wave rectified, essentially d.c. supply. The output voltage from the rectifier is applied to a smoothing capacitor which, under no-load conditions, maintains a substantially constant d.c. voltage across its terminals, equal to the peak value of the output voltage. Under load conditions, the capacitor discharges when the output voltage from the rectifier falls below its peak. The capacitor recharges when the output voltage rises above the capacitor voltage. As the capacitor charges, current from the source is supplied in pulses, when the diodes in the rectifier conduct. These current pulses have peak values considerably greater than the steady load current. A disadvantage of this arrangement is that harmonics are caused on the mains supply which can cause radio interference. Furthermore, the power factor is poor, since the supply voltage and current are 90° out-of-phase.

It has been proposed to connect an inductor in series with the capacitor to balance its reactance, and thus improve the power factor. However, these inductors are large and expensive.

Another solution is to remove the smoothing capacitor and apply the full-wave rectified output from the bridge to a switched-mode power supply. A disadvantage of this arrangement is that the current through the switching transistor in the switched mode power supply increases as the voltage falls, in order to maintain a steady load current. The transistor thus has to be sufficiently large to switch these high currents. Also, the transistor gets exceedingly hot. Therefore, a large transistor and heatsink are required, which makes the power supply more costly.

We have now devised an a.c. rectifier circuit which alleviates the above-mentioned problems.

In accordance with this invention there is provided an a.c. to d.c. voltage converter, comprising a rectifier having input terminals connected to an a.c. supply and output terminals connected to a smoothing circuit, the smoothing circuit comprising a plurality of capacitors which are charged in series from the supply and which are discharged in parallel through a load connected to its output terminals.

The capacitance applied across the supply during charging is less than the capacitance of any of the capacitors. The power factor is therefore improved because the reactive part of the load is small compared with conventional capacitor-smoothed converters. However, the capacitors discharge in parallel, so that ample charge is available to maintain current flow through the load when the output voltage from the rectifier falls.

Preferably the capacitors are charged through a resistor which adds an in-phase (resistive) portion to the out-of-phase (reactive) current during charging, so that the power factor is further improved, and so that the harmonic content of the supply current is reduced. Preferably the resistor is connected out of circuit as the capacitors discharge. Preferably two capacitors are charged in series and discharged in parallel.

Preferably switching means are provided for connecting said capacitors in series during charging and for connecting said capacitors in parallel during discharging. Preferably the switching means comprises diodes.

Preferably the capacitors charge to a voltage which is substantially equal to V_{R(MAX)}÷n where V_{R(MAX)} is the maximum voltage output from the rectifier and n is the minimum number of capacitors charged in series.

Preferably the capacitors are discharged through the load when the voltage output from the rectifier falls below V_{R(MAX)}÷ n.

Preferably the rectifier comprises a full-wave rectifier such as a diode bridge. It will be appreciated that the smoothing circuit does not entirely remove all of the a.c. ripple from the rectifier output voltage, however the output voltage requires far less regulation by a switched mode power supply than an unsmoothed full-wave rectified a.c. voltage does. Therefore, preferably the smoothing circuit is connected to a switched-mode voltage regulator.

An embodiment of this invention will now be described by way of example only, and with reference to the accompanying drawings, in which:
FIGURE 1 is a schematic diagram of a conventional full-wave diode bridge rectifier;
FIGURE 2 is a graph of the voltage output waveform of the diode bridge of Figure 1, with and without a smoothing capacitor connected across its output terminals;
FIGURE 3 is a graph of the supply current to the diode bridge of Figure 1 when a smoothing capacitor is connected across its output terminals;
FIGURE 4 is a schematic diagram of a conventional switched mode power supply;
FIGURE 5 is a schematic diagram of smoothing circuit of an a.c. to d.c. voltage converter in accordance with this invention;
FIGURE 6 is a graph of the voltage output from the circuit of Figure 5; and
FIGURE 7 is a graph of the supply current and voltage to the circuit of Figure 5.

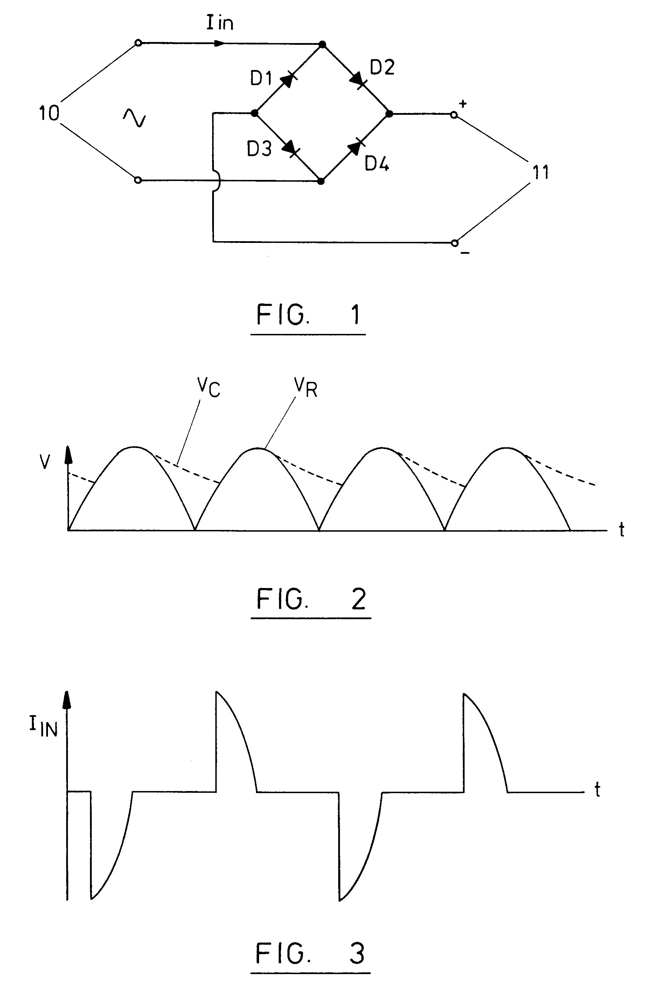

Referring to Figure 1 of the drawings there is shown a conventional full-wave rectifier bridge comprising four diodes D1-D4 having input terminals 10 connected across an a.c. supply. During positive half cycles of the a.c. supply, diodes D2,D3 conduct, so that current flows in one direction through a load connected across its output terminals 11. During negative half cycles, diodes Dl,D4 conduct so that current flows in the same direction through the load.

Referring to Figure 2 of the drawings, a full-wave rectified a.c. voltage signal V_{R} thus appears across the output terminals 11. Smoothing of the output voltage V_{R} is frequently effected by shunting the load with a large capacitor. The capacitor stores energy during each conduction period of the diodes and delivers this energy to the load during each non-conducting period. In this way, the time during which current flows through the load is prolonged, and the a.c. ripple is considerably decreased. Under no-load conditions, the capacitor voltage VC is substantially equal to the maximum value of VR. However, under load conditions, the capacitor discharges when the output voltage from the rectifier falls below V_{C}, as shown by the dotted lines in Figure 2.

Referring to Figure 3, current flows into the capacitor, to recharge the capacitor, when V_{R} exceeds V_{C}, and this causes spikes of current to be drawn from the a.c. supply. These current spikes lead the voltage in phase by approximately 90°, thereby causing a poor power factor and generating harmonics on the a.c. supply.

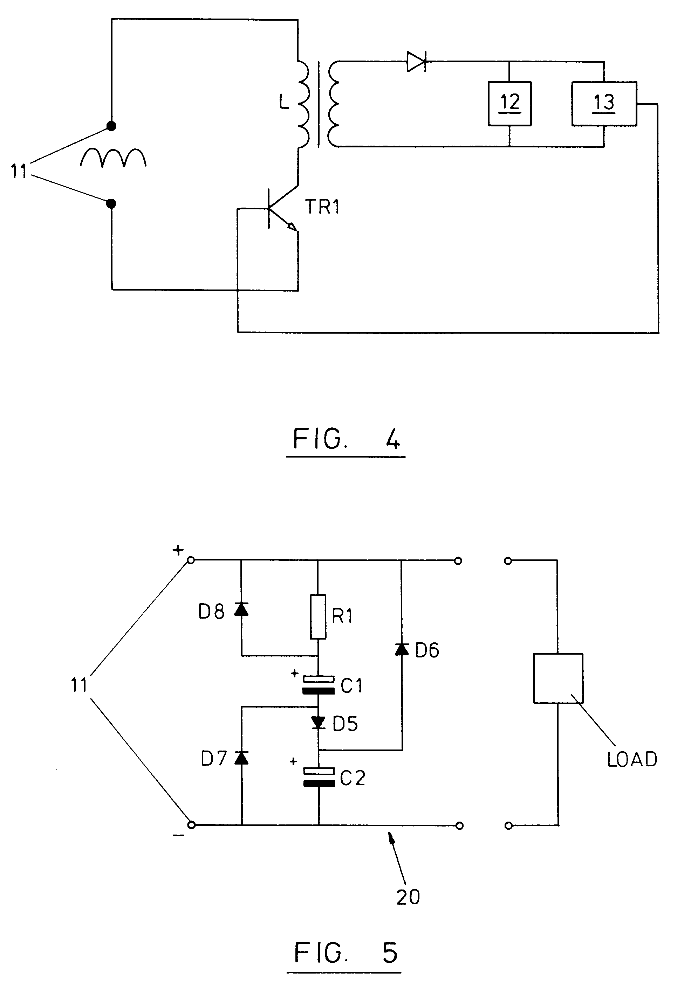

Referring to Figure 4 of the drawings, there is shown a switched mode power supply capable of converting a full-wave rectified a.c. voltage from a bridge rectifier into a steady d.c. voltage. This circuit avoids the above-mentioned power factor problems since the capacitor is omitted. An inductor L, connected in series with a switching transistor TR1, is connected across the full-wave supply from the rectifier. A load 12 is connected across a secondary winding which is coupled with the inductor L, and a control circuit 13 is connected in parallel with the load L to monitor the voltage across the load. The circuit 13 provides control pulses to turn transistor TR1 on and off, so that current flows through the inductor L. The duty cycle of the control pulses is varied according to the voltage across the load, so that energy stored in the inductor L is used to maintain a steady load current, and hence a steady load voltage, as the full-wave rectified input voltage falls below the desired output voltage. It will be appreciated that this involves switching the transistor TR1 when large currents are flowing through the inductor L: this is undesirable since the transistor needs to be large to cope with the high currents and temperatures involved.

Referring to Figure 5 of the drawings, in accordance with this invention a smoothing circuit is connected across the output terminals of the full-wave diode bridge rectifier in place of the usual large smoothing capacitor. The circuit comprises two small-value capacitors C1,C2, having for example a capacitance of 100µF each, connected in series with a resistor R1 across the positive and negative supply rails. The valve of the resistor determines the resistive content of the load connected across the supply, and hence its value substantially determines the power factor and harmonic content of the supply current. We have found that a 220 ohm resistor is sufficiently large to maintain a power factor close to unity. The negative electrode of capacitor C1 is connected to the positive electrode of capacitor C2 by a diode D5 having its anode and cathode terminals connected to capacitors C1,C2 respectively. The junction between the positive electrode of capacitor C2 and the cathode of diode D5 is connected to the anode of a diode D6, having its cathode connected to the positive supply rail. The junction between the negative electrode of capacitor C1 and the anode of diode D5 is connected to the cathode of a diode D7, having its anode connected to the negative supply rail. A diode D8 has its cathode connected to the positive supply rail and its anode connected to the junction between the resistor R1 and the positive electrode of the capacitor C1. A small capacitor (not shown) having a low reactance at high frequencies is connected between the positive and negative supply rails.

In use, the positive and negative supply rails of the circuit 20 are connected directly to the respective output terminals 11 of the diode bridge. Capacitors C1 and C2 charge through resistor R1 when the voltage V_{R} across the supply rails rises towards its peak value V_{R(MAX)}. The voltage at the junction between capacitors C1,C2 will be ½ V_{R(MAX)} because the two capacitors are connected in series. It will be appreciated, from the following description, that the voltage across capacitors C1 and C2 will be the same regardless of their respective capacitance values.

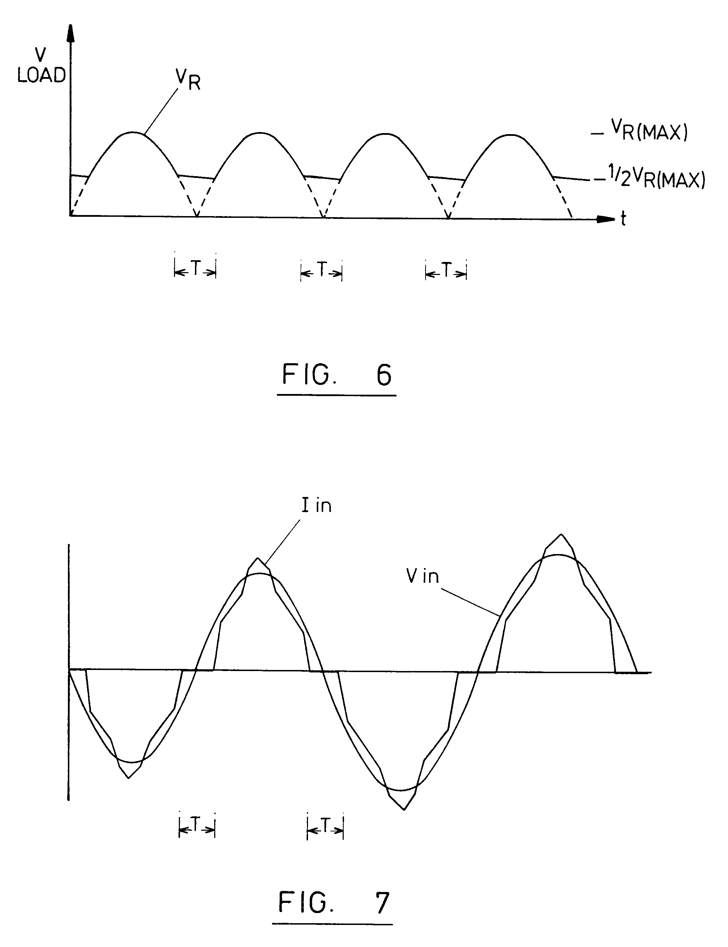

Referring to Figure 6 of the drawings, as V_{R} falls below its maximum value, capacitors C1,C2 are prevented from discharging in series through resistor R1 and the load by the diode D5, when the latter becomes reverse biassed. However, when V_{R} falls below the voltage across the capacitor C2, i.e. ½ V_{R(MAX)} diode D6 becomes forward biassed and capacitor C2 discharges through the load. Likewise diodes D7 and D8 become forward biassed and capacitor C1 discharges through the load. In practice capacitors C1,C2 discharge in turn through the load as their respective voltages fall below each other.

It will be appreciated that the capacitors C1,C2 are charged in series and are discharged in parallel. The charge on the capacitors serves to maintain the load voltage at substantially ½ V_{R(MAX)} when V_{R} falls below that value. The period T during which no input current Iᵢₙ is drawn from the supply is substantially less than that of a circuit using a conventional smoothing capacitors. Therefore, the capacitors do not need to have a large capacitance value. The capacitors C1,C2 charge in series through R1 when V_{R} rises above their respective voltages.

The voltage across the positive and negative rails of the circuit thus has some degree of ripple, however this requires far less regulation by a switched mode power supply than an unsmoothed supply. Accordingly the switching transistor in the switched mode power supply does not need to be as large.

It can be seen from Figure 7 that the input current Iᵢₙ is substantially in-phase which the input voltage, so that a power factor close to unity is achieved, and so that the harmonics on the supply are reduced.

## Claims

**1)** An a.c. to d.c. voltage converter comprising a rectifier having input terminals connected to an a.c. supply and output terminals connected to a smoothing circuit, the smoothing circuit comprising a plurality of capacitors which are charged in series from the supply through a resistor, and which are discharged in parallel through a load connected to the output terminals.

**2)** An a.c. to d.c. voltage converter as claimed in claim 1, comprising switching means arranged to connect the resistor out of circuit whilst said capacitors are discharged.

**3)** An a.c. to d.c. voltage converter as claimed in claim 2, in which the switching means is arranged to connect said capacitors in series during charging and in parallel during discharging.

**4)** An a.c. to d.c. voltage converter as claimed in claims 2 or 3, in which the switching means comprises diodes.

**5)** An a.c. to d.c. voltage converter as claimed in any preceding claim, in which the capacitors charge to a voltage which is substantially equal to V_{R(MAX)} ÷ n, where V_{R(MAX)} is the maximum voltage output from the rectifier and n is the minimum number of capacitors charged in series.

**6)** An a.c. to d.c. voltage converter as claimed in claim 5, in which the capacitors discharge through the load when the output from the rectifier falls below V_{R(MAX)} ÷ n.

**7)** An a.c. to d.c. voltage converter as claimed in any preceding claim, in which the rectifier comprises a full-wave rectifier.

**8)** An a.c. to d.c. voltage converter as claimed in any preceding claim, in which the smoothing circuit is connected to a switched-mode voltage regulator.
